# EUROPÄISCHE PATENTANMELDUNG

(11) **EP 3 796 034 A1**
(43) Veröffentlichungstag der Anmeldung: **24.03.2021**
(21) Anmeldenummer: 19197754.5
(22) Anmeldetag: 17.09.2019
(51) Int. Cl.: G01S 7/486, G01S 7/491, G01S 17/08, G01S 7/4912, G01S 7/481, G02B 15/04, G02B 19/00

(54) **VORRICHTUNG ZUR OPTISCHEN DISTANZMESSUNG ZU SOWOHL STREUENDEN ALS AUCH REFLEKTIERENDEN ZIELOBJEKTEN**

(71) Anmelder: Hilti Aktiengesellschaft, 9494 Schaan (LI)
(72) Erfinder: Gogolla, Torsten, 9494 Schaan (LI); Cieslak, Rafal, 6800 Feldkirch (AT); Eyrich, Petra, 9443 Widnau (CH); Dang, Lieu-Kim, 9473 Gams (CH)
(74) Vertreter: Hilti Aktiengesellschaft Corporate Intellectual Property

(57) **Zusammenfassung**

Vorrichtung (11) zur optischen Distanzmessung zu einem Zielobjekt, das als streuendes Zielobjekt oder reflektierendes Zielobjekt ausgebildet ist, aufweisend eine Distanzmesseinrichtung (13) und eine Anpasseinrichtung (14). In der Distanzmesseinrichtung (13) wird ein Laserstrahl erzeugt, der mithilfe der Anpasseinrichtung (14) an eine externe Optik (12) angepasst wird. Die Anpasseinrichtung (14) umfasst eine Strahlformungsoptik (15) und eine Fokusverschiebeeinrichtung (16).

## Beschreibung

### Technisches Gebiet

Die vorliegende Erfindung betrifft eine Vorrichtung zur optischen Distanzmessung zu einem Zielobjekt gemäß dem Oberbegriff des Anspruchs 1.

### Stand der Technik

Bekannte Vorrichtungen zur optischen Distanzmessung sind neben handgehaltenen Messgeräten beispielsweise für den Einbau in Totalstationen vorgesehen. Beim Einbau in eine Totalstation wird die Vorrichtung mit weiteren optischen Elementen, die beispielsweise als Teleskop ausgebildet sind, kombiniert. Zur Abgrenzung werden die weiteren optischen Elemente als externe Optik bezeichnet.

Aus dem Stand der Technik sind unterschiedliche Vorschläge bekannt, um eine Vorrichtung zur optischen Distanzmessung zu streuenden Zielobjekten und zu reflektierenden Zielobjekten einsetzen zu können. Aus DE 198 40 049 A1 ist eine Vorrichtung zur optischen Distanzmessung bekannt, die einen ersten Laserstrahl mit einer großen Strahldivergenz und einen zweiten Laserstrahl mit einer geringen Strahldivergenz erzeugt, wobei der erste Laserstrahl für die optische Distanzmessung zu streuenden Zielobjekten und der zweite Laserstrahl für die optische Distanzmessung zu reflektierenden Zielobjekten vorgesehen ist. Ein alternativer Vorschlag besteht darin, in einer Distanzmesseinrichtung einen kollimierten Laserstrahl zu erzeugen, der mithilfe einer Anpasseinrichtung, die hinter der Distanzmesseinrichtung angeordnet ist, umgeformt und an den Typ des Zielobjektes angepasst werden kann.

Aus EP 2 527 867 B1 ist eine Distanzmesseinrichtung mit koaxialer Anordnung bekannt, die einen kollimierten Laserstrahl erzeugt. Die Distanzmesseinrichtung umfasst eine Laserstrahlquelle, einen Detektor, eine Strahlformungsoptik mit einer Laserstrahlformungsoptik und einer Empfangsstrahlformungsoptik und eine Strahlteilungsoptik, die den Laserstrahl und Empfangsstrahl voneinander trennt. Die Strahlformungsoptik ist als Kollimationsoptik ausgebildet, die den Laserstrahl in einen kollimierten Laserstrahl umformt. Der kollimierte Laserstrahl, der die Distanzmesseinrichtung verlässt, ist für die optische Distanzmessung zu streuenden Zielobjekten ausgelegt. Für die optische Distanzmessung zu reflektierenden Zielobjekten ist die Strahlungsleistung der Laserstrahlquelle zu groß, was zu einem Übersteuern des Detektors führen kann. Bei reflektierenden Zielobjekten, die als Einzelretroreflektor ausgebildet sind, ist die Verwendung von kollimierten Laserstrahlen nachteilig. Ein kollimierter Laserstrahl muss sehr genau auf das Zentrum des Einzelretroreflektors ausgerichtet werden, um zu verhindern, dass der Empfangsstrahl nicht auf den Detektor auftrifft. Wenn der Laserstrahl nicht auf das Zentrum des Einzelretroreflektors auftrifft, entsteht ein Parallelversatz des Empfangsstrahls gegenüber der optischen Achse des Laserstrahls.

Aus DE 10 2013 205 589 A1 ist eine Vorrichtung zur optischen Distanzmessung zu streuenden Zielobjekten und reflektierenden Zielobjekten bekannt. Die Vorrichtung umfasst eine Distanzmesseinrichtung, die eine Laserstrahlquelle, einen Detektor, eine Strahlteilungsoptik und eine Strahlformungsoptik mit einer Laserstrahlformungsoptik und einer Empfangsstrahlformungsoptik aufweist, und eine Anpasseinrichtung, die im Strahlengang des Laserstrahls hinter der Distanzmesseinrichtung angeordnet ist. Die Anpasseinrichtung umfasst eine zweite Laserstrahlformungsoptik und eine zweite Empfangsstrahlformungsoptik. Die zweite Laserstrahlformungsoptik ist als Zerstreuungsoptik ausgebildet, die den kollimierten Laserstrahl in einen aufgeweiteten Laserstrahl umformt. Die zweite Empfangsstrahlformungsoptik ist als Streuscheibe ausgebildet, die den am Zielobjekt reflektierten Laserstrahl dämpft. Um den Laserstrahl an unterschiedliche Zielobjekte anpassen zu können, kann die Anpasseinrichtung mehrere zweite Laserstrahlformungsoptiken, die sich in den aufweitenden Eigenschaften voneinander unterscheiden, und/oder mehrere als Streuscheiben ausgebildete, zweite Empfangsstrahlformungsoptiken, die sich in ihren lichtstreuenden Eigenschaften voneinander unterscheiden, aufweisen.

Die aus DE 10 2013 205 589 A1 bekannte Vorrichtung zur optischen Distanzmessung weist mehrere Nachteile auf: Fremdlicht, beispielsweise in Form von direkt oder indirekt einfallendem Sonnenlicht, erhöht die für die Distanzmessung erforderliche Messzeit oder bei einer festen Messzeit den Messfehler. Fremdlicht ist im Gegensatz zum Laserstrahl nicht gerichtet, sondern kann aus unterschiedlichen Richtungen einfallen. Die als Streuscheiben ausgebildeten zweiten Empfangsstrahlformungsoptiken dämpfen Fremdlicht sehr viel schwächer als den gerichteten Empfangsstrahl. Außerdem ist der mittels der Zerstreuungsoptik aufgeweitete Laserstrahl nicht geeignet, um in eine externe Optik eingekoppelt zu werden.

Aus WO 2016/184735 A1 ist eine weitere Vorrichtung zur optischen Distanzmessung zu streuenden Zielobjekten und reflektierenden Zielobjekten bekannt. Die Vorrichtung umfasst eine Laserstrahlquelle, einen Detektor und eine Laserstrahlformungseinrichtung mit einer ersten Laserstrahlformungsoptik und einer zweiten Laserstrahlformungsoptik, die von der ersten Laserstrahlformungsoptik verschieden ist und im Strahlengang des Laserstrahls hinter der ersten Laserstrahlformungsoptik angeordnet ist.

Die erste Laserstrahlformungsoptik ist als Kollimationsoptik ausgebildet und für die Distanzmessung zu streuenden Zielobjekten ausgelegt. Die zweite Laserstrahlformungsoptik ist als erstes Array von mehreren Sendepixeln ausgebildet und für die Distanzmessung zu reflektierenden Zielobjekten, die als Einzelretroreflektor oder Flächenretroreflektor ausgebildet sein können, ausgelegt. Der Transmissionsgrad der Sendepixel ist mittels einer ersten Steuereinheit zwischen drei Zuständen, undurchlässig mit einem Transmissionsgrad kleiner als 10 %, teildurchlässig mit einem Transmissionsgrad zwischen 10 % und 90 % und volldurchlässig mit einem Transmissionsgrad grösser als 90 %, schaltbar. Über den Transmissionsgrad der einzelnen Sendepixel des ersten Arrays kann der Laserstrahl an den Typ des Zielobjektes angepasst werden. Um ein Übersteuern des Detektors bei der Distanzmessung zu reflektierenden Zielobjekten zu verhindern, muss die Strahlungsleistung des auftreffenden Empfangsstrahls deutlich kleiner als die Strahlungsleistung des ausgesandten Laserstrahls sein.

Bei einem Einzelretroreflektor werden mindestens 50 % der Sendepixel des ersten Arrays, die im Strahlengang des Laserstrahls angeordnet sind, in den undurchlässigen Sendezustand geschaltet. Die Sendepixel, die im Strahlengang des Laserstrahls angeordnet sind und teildurchlässig oder volldurchlässig ausgebildet sind, bilden eine Sendeblende für den Laserstrahl, die eine starke Aufweitung des Laserstrahls ermöglicht. Durch die Aufweitung kann die erforderliche Genauigkeit, mit der der Laserstrahl auf den Einzelretroreflektor ausgerichtet werden muss, reduziert werden. Bei teildurchlässigen Sendepixeln lässt sich der Anteil der durchgelassenen Strahlungsleistung über den Transmissionsgrad der Sendepixel verändern; je kleiner der Transmissionsgrad ist, umso stärker wird der Laserstrahl gedämpft.

Die aus WO 2016/184735 A1 bekannte Vorrichtung zur optischen Distanzmessung hat den Nachteil, dass die Sendeblende einen großen Teil des Laserstrahls ausblendet, was bei einem stark strukturierten und inhomogenen Laserstrahl zu einer starken Signalvariation führen kann. Außerdem ist die Vorrichtung zur optischen Distanzmessung nicht geeignet, um mit einer externen Optik, wie beispielsweise einem Zoomobjektiv oder einem Teleskop gekoppelt zu werden.

### Darstellung der Erfindung

Die Aufgabe der vorliegenden Erfindung besteht in der Entwicklung einer Vorrichtung zur optischen Distanzmessung, die für die optische Distanzmessung zu streuenden Zielobjekten und reflektierenden Zielobjekten geeignet ist, wobei der Laserstrahl in eine externe Optik eingekoppelt wird. Die Vorrichtung zur optischen Distanzmessung soll über einen Temperaturbereich zwischen -20 °C und +65°C stabil arbeiten.

Diese Aufgabe wird bei der eingangs genannten Vorrichtung zur optischen Distanzmessung zu einem streuenden Zielobjekt oder einem reflektierenden Zielobjekt erfindungsgemäß durch die Merkmale des unabhängigen Anspruchs 1 gelöst. Vorteilhafte Weiterbildungen sind in den abhängigen Ansprüchen angegeben.

Erfindungsgemäß ist die Vorrichtung zur optischen Distanzmessung dadurch gekennzeichnet, dass die zweite Laserstrahlformungsoptik als Fokussieroptik, die den kollimierten Laserstrahl in einen fokussierten Laserstrahl umformt, ausgebildet ist und die Anpasseinrichtung eine Fokusverschiebeeinrichtung umfasst, die in den Strahlengang des fokussierten Laserstrahls verstellbar ist. Die als Kollimationsoptik ausgebildete erste Laserstrahlformungsoptik formt den Laserstrahl der Laserstrahlquelle in einen kollimierten Laserstrahl um, der im Anschluss mithilfe der als Fokussieroptik ausgebildeten zweiten Laserstrahlformungsoptik in einen fokussierten Laserstrahl umgeformt wird.

Eine Fokusverschiebeeinrichtung, die in den Strahlengang des fokussierten Laserstrahls verstellbar ist, eignet sich für die optische Distanzmessung zu streuenden Zielobjekten und zu reflektierenden Zielobjekten. Die optische Distanzmessung zu streuenden Zielobjekten erfolgt mit einer Fokusverschiebeeinrichtung, die außerhalb des Strahlengangs des fokussierten Laserstrahls angeordnet ist, und die optische Distanzmessung zu reflektierenden Zielobjekten, die als Einzelretroreflektor ausgebildet sind, erfolgt mit einer Fokusverschiebeeinrichtung, die im Strahlengang des fokussierten Laserstrahls angeordnet ist.

Bevorzugt sind die Kollimationsoptik und die Fokussieroptik an einem gemeinsamen Optikträger befestigt. Ein gemeinsamer Optikträger für die Kollimationsoptik und die Fokussieroptik ermöglicht eine ortsstabile Position des Fokuspunktes im geforderten Temperaturbereich. Hierdurch ist für die Distanzmessung zu streuenden Zielobjekten die Erhaltung des Justagezustands gewährleistet.

In einer bevorzugten Variante umfasst die Fokusverschiebeeinrichtung ein Fokusverschiebeelement, wobei die Fokusverschiebeeinrichtung zwischen einem ersten Zustand, in dem das Fokusverschiebeelement außerhalb des Strahlengangs des Laserstrahls angeordnet ist, und einem zweiten Zustand, in dem das Fokusverschiebeelement im Strahlengang des Laserstrahls angeordnet ist, verstellbar ist. Eine Fokusverschiebeeinrichtung, die zwischen zwei Zuständen verstellbar ist, eignet sich für die optische Distanzmessung zu streuenden Zielobjekten und zu reflektierenden Zielobjekten, die als Einzelretroreflektor oder als Flächenretroreflektor ausgebildet sind. Der erste Zustand der Fokusverschiebeeinrichtung, in dem das Fokusverschiebeelement außerhalb des Strahlengangs des Laserstrahls angeordnet ist, ist für die optische Distanzmessung zu streuenden Zielobjekten vorgesehen und der zweite Zustand der Fokusverschiebeeinrichtung, in dem das Fokusverschiebeelement im Strahlengang des Laserstrahls angeordnet ist, ist für die optische Distanzmessung zu Einzelretroreflektoren vorgesehen. Bei der Distanzmessung zu Flächenretroreflektoren kann der erste oder zweite Zustand der Fokusverschiebeeinrichtung verwendet werden.

Bevorzugt umfasst das Fokusverschiebeelement zwei schräg gestellte ebene Glasplatten, wobei im zweiten Zustand der Fokusverschiebeeinrichtung eine erste der zwei Glasplatten um einen positiven Neigungswinkel und eine zweite der zwei Glasplatten um einen entsprechenden negativen Neigungswinkel zu einer Ausbreitungsebene, die senkrecht zur optischen Achse des fokussierten Laserstrahls angeordnet ist, schräg gestellt ist. Durch die Schrägstellung der Glasplatten gegenüber der Ausbreitungsebene senkrecht zur optischen Achse des kollimierten Laserstrahls kann eine Rückreflexion des Laserstrahls in Richtung der Laserstrahlquelle bzw. in Richtung des Detektors verhindert oder zumindest verringert werden. Die Ausbildung der Fokusverschiebeelemente aus ebenen Glasplatten, die zur Ausbreitungsebene senkrecht zur optischen Achse des fokussierten Laserstrahls schräg gestellt sind, hat den Vorteil, dass die Fokuslage des fokussierten Laserstrahls verändert werden kann. Dabei lässt sich der Verschiebeweg über die Dicke der Glasplatten einstellen.

In einer alternativen bevorzugten Variante umfasst die Fokusverschiebeeinrichtung ein erstes Fokusverschiebeelement und ein zweites Fokusverschiebeelement, wobei die Fokusverschiebeeinrichtung zwischen einem ersten Zustand, in dem das erste und zweite Fokusverschiebeelement außerhalb des Strahlengangs des Laserstrahls angeordnet sind, einem zweiten Zustand, in dem das erste Fokusverschiebeelement im Strahlengang des Laserstrahls angeordnet ist, und einem dritten Zustand, in dem das zweite Fokusverschiebeelement im Strahlengang des Laserstrahls angeordnet ist, verstellbar ist. Eine Fokusverschiebeeinrichtung, die zwischen drei Zuständen verstellbar ist, eignet sich für die optische Distanzmessung zu streuenden Zielobjekten und zu reflektierenden Zielobjekten, die als Einzelretroreflektor oder als Flächenretroreflektor ausgebildet sind. Der erste Zustand der Fokusverschiebeeinrichtung, in dem das erste und zweite Fokusverschiebeelement außerhalb des Strahlengangs des Laserstrahls angeordnet sind, ist für die optische Distanzmessung zu streuenden Zielobjekten vorgesehen. Der zweite und dritte Zustand der Fokusverschiebeeinrichtung, in dem das erste bzw. zweite Fokusverschiebeelement im Strahlengang des Laserstrahls angeordnet sind, sind für die optische Distanzmessung zu Einzelretroreflektoren vorgesehen. Bei der Distanzmessung zu Flächenretroreflektoren kann der erste, zweite oder dritte Zustand der Fokusverschiebeeinrichtung verwendet werden.

Bevorzugt umfasst das erste Fokusverschiebeelement zwei schräg gestellte erste Glasplatten, wobei im zweiten Zustand der Fokusverschiebeeinrichtung eine erste der zwei ersten Glasplatten um einen positiven ersten Neigungswinkel α₁ und eine zweite der zwei ersten Glasplatten um einen entsprechenden negativen ersten -α₁ zu einer Ausbreitungsebene, die senkrecht zur optischen Achse des fokussierten Laserstrahls angeordnet ist, schräg gestellt ist, und das zweite Fokusverschiebeelement zwei schräg gestellte zweite Glasplatten, wobei im dritten Zustand der Fokusverschiebeeinrichtung eine erste der zwei zweiten Glasplatten um einen positiven zweiten Neigungswinkel α₂ und eine zweite der zwei zweiten Glasplatten um einen entsprechenden negativen zweiten Neigungswinkel -α₂ zur Ausbreitungsebene schräg gestellt ist. Durch die Schrägstellung der Glasplatten gegenüber der Ausbreitungsebene senkrecht zur optischen Achse des kollimierten Laserstrahls kann eine Rückreflexion des Laserstrahls in Richtung der Laserstrahlquelle bzw. in Richtung des Detektors verhindert oder zumindest verringert werden. Bei einer Fokusverschiebeeinrichtung mit mehreren Fokusverschiebeelementen kann die Fokuslage des fokussierten Laserstrahls unterschiedlich verschoben werden. Dabei ist der Verschiebeweg von der Dicke der Glasplatten, die für die Fokusverschiebeelemente verwendet werden, abhängig.

In einer bevorzugten Weiterentwicklung umfasst die Anpasseinrichtung eine Dämpfungseinrichtung, wobei die Dämpfungseinrichtung im Strahlengang des Laserstrahls zwischen der ersten Laserstrahlformungsoptik und der zweiten Laserstrahlformungsoptik angeordnet ist. Die Anordnung der Dämpfungseinrichtung im Strahlengang des Laserstrahls zwischen der ersten und zweiten Laserstrahlformungsoptik hat den Vorteil, dass die Dämpfung des Laserstrahls und ggfs. des Empfangsstrahls im kollimierten Laserstrahl erfolgt. Das Dämpfungselement kann im Strahlengang des kollimierten Laserstrahls gegenüber der Ausbreitungsebene des kollimierten Laserstrahls schräg gestellt werden, um eine Rückreflexion des Laserstrahls in Richtung der Laserstrahlquelle bzw. des Detektors zu verhindern oder zumindest zu verringern.

In einer bevorzugten Variante umfasst die Dämpfungseinrichtung ein Dämpfungselement, wobei die Dämpfungseinrichtung zwischen einem ersten Zustand, in dem das Dämpfungselement außerhalb des Strahlengangs des Laserstrahls angeordnet ist, und einem zweiten Zustand, in dem das Dämpfungselement innerhalb des Strahlengangs des Laserstrahls angeordnet ist, verstellbar ist. Eine Dämpfungseinrichtung, die zwischen zwei Zuständen verstellbar ist, eignet sich für die optische Distanzmessung zu streuenden Zielobjekten und zu reflektierenden Zielobjekten, die als Einzelretroreflektor oder als Flächenretroreflektor ausgebildet sind. Der erste Zustand der Dämpfungseinrichtung, in dem das Dämpfungselement außerhalb des Strahlengangs des Laserstrahls angeordnet ist, ist für die optische Distanzmessung zu streuenden Zielobjekten vorgesehen und der zweite Zustand der Dämpfungseinrichtung, in dem das Dämpfungselement im Strahlengang des Laserstrahls angeordnet ist, ist für die optische Distanzmessung zu reflektierenden Zielobjekten vorgesehen.

Besonders bevorzugt ist das Dämpfungselement im zweiten Zustand der Dämpfungseinrichtung um einen Neigungswinkel β zu einer Ausbreitungsebene, die senkrecht zur optischen Achse des kollimierten Laserstrahls angeordnet ist, schräg gestellt. Durch die Schrägstellung des Dämpfungselementes gegenüber der Ausbreitungsebene senkrecht zur optischen Achse des kollimierten Laserstrahls kann eine Rückreflexion des Laserstrahls in Richtung der Laserstrahlquelle bzw. in Richtung des Detektors verhindert oder zumindest verringert werden.

In einer alternativen bevorzugten Variante umfasst die Dämpfungseinrichtung ein erstes Dämpfungselement und ein zweites Dämpfungselement, wobei die Dämpfungseinrichtung zwischen einem ersten Zustand, in dem das erste und zweite Dämpfungselement außerhalb des Strahlengangs des Laserstrahls angeordnet sind, einem zweiten Zustand, in dem das erste Dämpfungselement im Strahlengang des Laserstrahls angeordnet ist, und einem dritten Zustand, in dem das zweite Dämpfungselement im Strahlengang des Laserstrahls angeordnet ist, verstellbar ist. Eine Dämpfungseinrichtung, die zwischen drei Zuständen verstellbar ist, eignet sich für die optische Distanzmessung zu streuenden Zielobjekten und zu reflektierenden Zielobjekten, die als Einzelretroreflektor oder als Flächenretroreflektor ausgebildet sind. Der erste Zustand der Dämpfungseinrichtung, in dem das erste und zweite Dämpfungselement außerhalb des Strahlengangs des Laserstrahls angeordnet sind, ist für die optische Distanzmessung zu streuenden Zielobjekten vorgesehen. Der zweite und dritte Zustand der Dämpfungseinrichtung, in dem das erste bzw. zweite Dämpfungselement im Strahlengang des Laserstrahls angeordnet sind, sind für die optische Distanzmessung zu reflektierenden Zielobjekten vorgesehen.

Besonders bevorzugt ist das erste Dämpfungselement im zweiten Zustand der Dämpfungseinrichtung um einen ersten Neigungswinkel β₁ und das zweite Dämpfungselement im dritten Zustand der Dämpfungseinrichtung um einen zweiten Neigungswinkel β₂ zu einer Ausbreitungsebene, die senkrecht zur optischen Achse des kollimierten Laserstrahls angeordnet ist, schräg gestellt. Durch die Schrägstellung des ersten und zweiten Dämpfungselementes gegenüber der Ausbreitungsebene senkrecht zur optischen Achse des kollimierten Laserstrahls kann eine Rückreflexion des Laserstrahls in Richtung der Laserstrahlquelle bzw. in Richtung des Detektors verhindert oder zumindest verringert werden.

In einer Weiterentwicklung weist die Vorrichtung eine erste Empfangsstrahlformungsoptik auf und die Anpasseinrichtung umfasst eine zweite Empfangsstrahlformungsoptik. Die erste Empfangsstrahlformungsoptik ist für die Distanzmessung zu streuenden Zielobjekten ausgelegt und die zweite Empfangsstrahlformungsoptik dient zur Anpassung des Empfangsstrahls an reflektierende Zielobjekte, die als Einzelretroreflektor oder Flächenretroreflektor ausgebildet sein können.

Die vorliegende Anmeldung betrifft weiterhin ein System umfassend die Vorrichtung zur optischen Distanzmessung und eine externe Optik, die im Strahlengang des Laserstrahls hinter der Vorrichtung angeordnet ist. Die externe Optik ist beispielsweise als Zoomobjektiv oder Teleskop ausgebildet.

Bevorzugt fällt eine rückseitige Fokusebene der externen Optik mit einer vorderseitigen Fokusebene der Fokussieroptik im Wesentlichen zusammen, wobei kein Fokusverschiebeelement im Strahlengang des Laserstrahls angeordnet ist. Wenn die externe Optik so positioniert ist, dass die vorderseitige Fokusebene der zweiten Laserstrahlformungsoptik mit der rückseitigen Fokusebene der externen Optik zusammenfällt, wird der fokussierte Laserstrahl von der externen Optik in einen kollimierten Laserstrahl umgeformt, der für die optische Distanzmessung zu streuenden Zielobjekten und zu Flächenretroreflektoren eingesetzt wird. Wenn der fokussierte Laserstrahl auf ein Fokusverschiebeelement trifft, das die vorderseitige Fokusebene der zweiten Laserstrahlformungsoptik gegenüber der rückseitigen Fokusebene der externen Optik verschiebt, kann die externe Optik den fokussierten Laserstrahl nicht kollimiert, sondern der fokussierte Laserstrahl wird in einen aufgeweiteten Laserstrahl umgeformt, der für die optische Distanzmessung zu Einzelretroreflektoren eingesetzt wird.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein erfindungsgemäßes System, das eine erfindungsgemäße Vorrichtung zur optischen Distanzmessung und eine externe Optik umfasst;
- FIG. 2: die erfindungsgemäße Vorrichtung zur optischen Distanzmessung der FIG. 1 in einem Schnitt entlang der Schnittebene in FIG. 1;
- FIG. 3: die optische Distanzmessung zu einem streuenden Zielobjekt mithilfe einer erfindungsgemäßen Vorrichtung zur optischen Distanzmessung;
- FIG. 4: die optische Distanzmessung mit Hilfe der in FIG. 3 dargestellten Vorrichtung zu einem reflektierenden Zielobjekt, das als Flächenretroreflektor ausgebildet ist; und
- FIG. 5: die optische Distanzmessung mit Hilfe der in FIG. 3 dargestellten Vorrichtung zu einem reflektierenden Zielobjekt, das als Einzelretroreflektor ausgebildet.

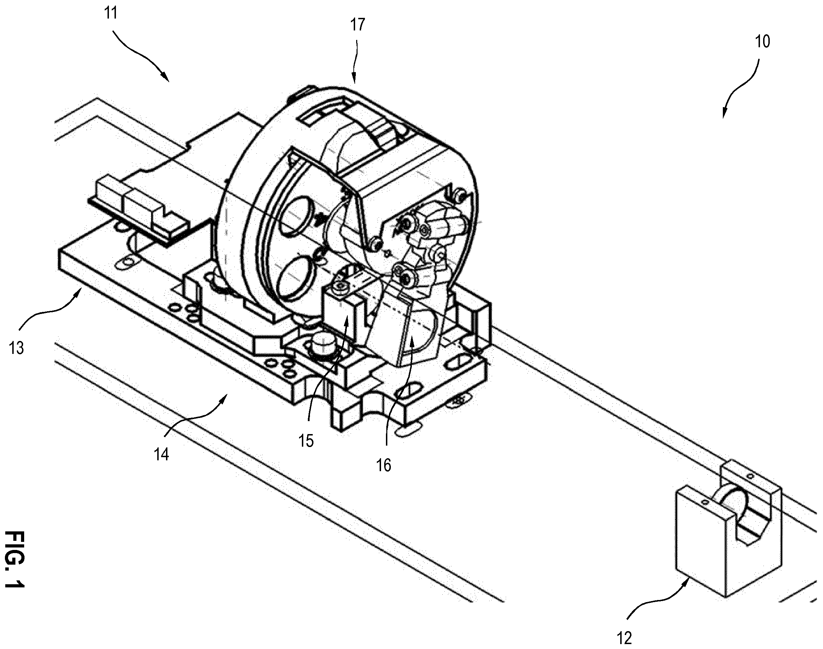

**FIG. 1** zeigt ein erfindungsgemäßes System **10**, das eine erfindungsgemäße Vorrichtung **11** zur optischen Distanzmessung zu einem Zielobjekt und eine externe Optik **12** umfasst. Die Vorrichtung 11 umfasst eine Distanzmesseinrichtung **13** und eine Anpasseinrichtung **14.**

In der Distanzmesseinrichtung 13 wird ein Laserstrahl erzeugt, der mithilfe der Anpasseinrichtung 14 an die externe Optik 12 angepasst wird. Die Anpasseinrichtung 14 umfasst eine Strahlformungsoptik **15** und eine Fokusverschiebeeinrichtung **16.** Zusätzlich kann die Anpasseinrichtung 14 eine Dämpfungseinrichtung **17** umfassen, die zwischen der Distanzmesseinrichtung 13 und der Strahlformungsoptik 15 angeordnet ist.

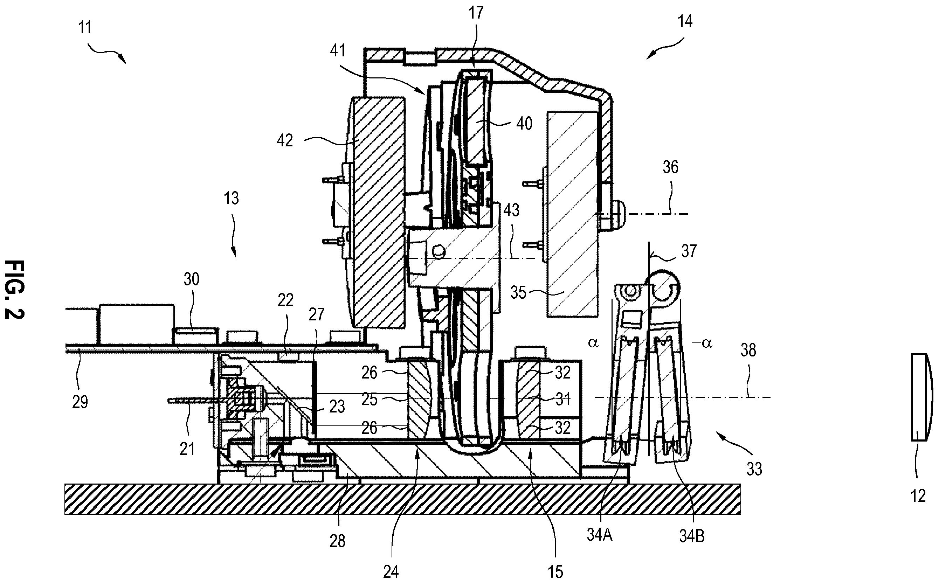

**FIG. 2** zeigt das erfindungsgemäße System 10 der FIG. 1 in einem Schnitt entlang der Schnittebene A-A. Das System 10 umfasst die Distanzmesseinrichtung 13, die Anpasseinrichtung 14 und die externe Optik 12.

Die Distanzmesseinrichtung 13 umfasst eine Laserstrahlquelle **21**, die als erste elektrooptische Komponente ausgebildet ist und einen Laserstrahl entlang einer optischen Achse aussendet, und einen Detektor **22**, der als zweite elektrooptische Komponente ausgebildet ist und einen an einem Zielobjekt gestreuten oder reflektierten Empfangsstrahl empfängt.

Die Distanzmesseinrichtung 13 ist koaxial ausgebildet, d.h. der Laserstrahl und der Empfangsstrahl verlaufen koaxial zueinander. Um den Laserstrahl und den Empfangsstrahl voneinander zu trennen, umfasst die Distanzmesseinrichtung 13 eine Strahlteilungsoptik, die als Lochspiegel, Polarisationsstrahlteiler oder halbdurchlässiger Spiegel ausgebildet sein kann. Die Distanzmesseinrichtung 13 umfasst eine Strahlteilungsoptik **23**, die als Lochspiegel ausgebildet ist. Im Ausführungsbeispiel wird der Empfangsstrahl von der Strahlteilungsoptik 23 umgelenkt und der Laserstrahl tritt ohne Ablenkung durch die Strahlteilungsoptik 23.

Der Laserstrahl, der von der Laserstrahlquelle 21 entlang der optischen Achse ausgesendet wird, ist divergent und muss mithilfe eines optischen Elementes geformt werden. Die Distanzmesseinrichtung 13 umfasst eine erste Strahlformungsoptik **24**, die den Laserstrahl und den Empfangsstrahl formt. Da die Strahlteilungsoptik 23 als Lochspiegel ausgebildet ist, dient der innere Bereich der ersten Strahlformungsoptik 24 zur Strahlformung des Laserstrahls und wird als erste Laserstrahlformungsoptik **25** bezeichnet und der äussere Bereich der ersten Strahlformungsoptik 24 dient zur Strahlformung des Empfangsstrahls und wird als erste Empfangsstrahlformungsoptik **26** bezeichnet. Bei einer Strahlteilungsoptik, die als Polarisationsstrahlteiler oder halbdurchlässiger Spiegel ausgebildet ist, dient der innere Bereich der ersten Strahlformungsoptik 24 zur Strahlformung des Laserstrahls und die gesamte erste Strahlformungsoptik 24 dient zur Strahlformung des Empfangsstrahls. Im Strahlengang des Laserstrahls kann zwischen der Strahlteilungsoptik 23 und der ersten Strahlformungsoptik 24 eine Blende **27** angeordnet sein. Die Blende 27 dient dazu, Rückreflexionen des Laserstrahls in Richtung des Detektors 22 zu verhindern oder zumindest zu verringern.

Die Laserstrahlquelle 21, der Detektor 22, die Strahlteilungsoptik 23 und die erste Strahlformungsoptik 24 bilden die Distanzmesseinrichtung 13. Die Distanzmesseinrichtung 13 weist zusätzlich einen Optikträger **28**, eine Leiterplatte **29** und eine Steuer- und Auswerteeinrichtung **30** auf. Die Laserstrahlquelle 21, die Strahlteilungsoptik 23 und die erste Strahlformungsoptik 24 sind am Optikträger 28 befestigt und der Detektor 22 ist an der Leiterplatte 29 befestigt. Die Steuer- und Auswerteeinrichtung 30 ist mit der Laserstrahlquelle 21 und dem Detektor 22 verbunden und bestimmt beispielsweise aus einer Zeitdifferenz zwischen einem Referenzstrahl und dem Empfangsstrahl die Distanz zu einem streuenden oder reflektierenden Zielobjekt.

Die Laserstrahlquelle 21 sendet einen divergenten Laserstrahl aus, der auf die Strahlteilungsoptik 23 gerichtet ist. An der Strahlteilungsoptik 23 wird ein größtmöglicher Teil des Laserstrahls transmittiert und trifft auf die erste Laserstrahlformungsoptik 25, an der eine erste Strahlformung erfolgt. Die erste Laserstrahlformungsoptik 25 ist als Kollimationsoptik ausgebildet, die den divergenten Laserstrahl in einem kollimierten Laserstrahl umformt. Die optischen Eigenschaften der Kollimationsoptik sind an die Distanzmessung zu streuenden Zielobjekten in großer Entfernung (Unendlich) angepasst. Im Ausführungsbeispiel sind die erste Laserstrahlformungsoptik 25 und die erste Empfangsstrahlformungsoptik 26 als Kollimationsoptik ausgebildet und weisen die gleichen optischen Eigenschaften auf. Alternativ können sich die erste Laserstrahlformungsoptik und die erste Empfangsstrahlformungsoptik in ihren optischen Eigenschaften unterscheiden.

Der aus der Distanzmesseinrichtung 13 austretende Laserstrahl wird mithilfe der Anpasseinrichtung 14 an die externe Optik 12 angepasst. Die Anpasseinrichtung 14 umfasst die Strahlformungsoptik 15, die im Folgenden als zweite Strahlformungsoptik bezeichnet wird, und die Fokusverschiebeeinrichtung 16. Die zweite Strahlformungsoptik 15 formt den Laserstrahl und den Empfangsstrahl. Da die Strahlteilungsoptik 23 als Lochspiegel ausgebildet ist, dient der innere Bereich der zweiten Strahlformungsoptik 15 zur Strahlformung des Laserstrahls und wird als zweite Laserstrahlformungsoptik **31** bezeichnet und der äussere Bereich der zweiten Strahlformungsoptik 15 dient zur Strahlformung des Empfangsstrahls und wird als zweite Empfangsstrahlformungsoptik **32** bezeichnet. Bei einer Strahlteilungsoptik, die als Polarisationsstrahlteiler oder halbdurchlässiger Spiegel ausgebildet ist, dient der innere Bereich der zweiten Strahlformungsoptik 15 zur Strahlformung des Laserstrahls und die gesamte zweite Strahlformungsoptik 15 dient zur Strahlformung des Empfangsstrahls.

Die zweite Laserstrahlformungsoptik 31 ist als Fokussieroptik ausgebildet, die den kollimierten Laserstrahl in einem fokussierten Laserstrahl umformt. Die optischen Eigenschaften der Fokussieroptik sind an die Distanzmessung zu streuenden und reflektierenden Zielobjekten angepasst. Im Ausführungsbeispiel sind die zweite Laserstrahlformungsoptik 31 und die zweite Empfangsstrahlformungsoptik 32 als Fokussieroptik ausgebildet und weisen die gleichen optischen Eigenschaften auf. Alternativ können sich die zweite Laserstrahlformungsoptik und die zweite Empfangsstrahlformungsoptik in ihren optischen Eigenschaften unterscheiden.

Die Fokusverschiebeeinrichtung 16 ist zwischen der zweiten Laserstrahlformungsoptik 15 und der externen Optik 12 angeordnet und dient bei der Distanzmessung zu reflektierenden Zielobjekten dazu, die Lage des Fokuspunktes anzupassen. Die Fokusverschiebeeinrichtung 16 umfasst ein Fokusverschiebeelement **33**, das zwei ebene Glasplatten **34A**, **34B** aufweist.

Die Fokusverschiebeeinrichtung 16 ist zwischen einem ersten Zustand, in dem das Fokusverschiebeelement 33 außerhalb des Strahlengangs des Laserstrahls angeordnet ist, und einem zweiten Zustand, in dem das Fokusverschiebeelement 33 innerhalb des Strahlenganges des Laserstrahls angeordnet ist, verstellbar. Die Verstellung der Fokusverschiebeeinrichtung 16 erfolgt im Ausführungsbeispiel über einen Schrittmotor **35**, mit dessen Hilfe das Fokusverschiebeelement 33 um eine Schwenkachse **36** schwenkbar ausgebildet ist. FIG. 2 zeigt die Fokusverschiebeeinrichtung 16 im zweiten Zustand.

Die ebenen Glasplatten 34A, 34B sind zu einer Ausbreitungsebene **37** des Laserstrahls schräg gestellt, wobei die Ausbreitungsebene senkrecht zur optischen Achse **38** des Laserstrahls angeordnet ist. Die erste der zwei Glasplatten 34A ist um einen positiven Neigungswinkel α zur Ausbreitungsebene 37 geneigt und die zweite der zwei Glasplatten 34B ist um einen entsprechenden negativen Neigungswinkel -α zur Ausbreitungsebene 37 geneigt, um eine Rückreflexion des Laserstrahls in Richtung der Laserstrahlquelle 21 bzw. in Richtung des Detektors 22 zu verhindern oder zumindest zu verringern. Der Neigungswinkel wird zwischen der Oberfläche der Glasplatten 34A, 34B und der Ausbreitungsebene 37 gemessen.

Die Anpasseinrichtung 14 kann zusätzlich die Dämpfungseinrichtung 17 umfassen, die zwischen der ersten Laserstrahlformungsoptik 25 und der zweiten Laserstrahlformungsoptik 31 angeordnet ist. Die Dämpfungseinrichtung 17 kann ein Dämpfungselement oder mehrere Dämpfungselemente, die sich im Transmissionsgrad voneinander unterscheiden, aufweisen. Da die Strahlteilungsoptik 23 als Lochspiegel ausgebildet ist, dient der innere Bereich eines Dämpfungselementes zur Dämpfung des Laserstrahls und wird als Laserstrahl-Dämpfungselement bezeichnet und der äussere Bereich eines Dämpfungselementes dient zur Dämpfung des Empfangsstrahls und wird als Empfangsstrahl-Dämpfungselement bezeichnet. Bei einer Strahlteilungsoptik, die als Polarisationsstrahlteiler oder halbdurchlässiger Spiegel ausgebildet ist, dient der innere Bereich eines Dämpfungselementes zur Dämpfung des Laserstrahls und das gesamte Dämpfungselement dient zur Dämpfung des Empfangsstrahls.

Die Dämpfungseinrichtung 17 umfasst ein Dämpfungselement **40**, das in einem Drehrad **41** angeordnet ist. Das Drehrad ist über einen Schrittmotor **42** um eine Drehachse **43** drehbar ausgebildet. Die Dämpfungseinrichtung 17 ist zwischen einem ersten Zustand, in dem das Dämpfungselement 40 außerhalb des Strahlengangs des Laserstrahls angeordnet ist, und einem zweiten Zustand, in dem das Dämpfungselement innerhalb des Strahlengangs des Laserstrahls angeordnet ist, verstellbar. FIG. 2 zeigt die Dämpfungseinrichtung 17 im ersten Zustand. Mithilfe der Dämpfungseinrichtung 17 kann der Laserstrahl an das Zielobjekt angepasst werden. Im Rahmen der vorliegenden Anmeldung werden streuende Zielobjekte und reflektierende Zielobjekte unterschieden.

Als streuende Zielobjekte sind Zielobjekte definiert, an denen ein Laserstrahl gestreut wird, und als reflektierende Zielobjekte sind Zielobjekte definiert, an denen ein Laserstrahl überwiegend reflektiert wird. Reflektierende Zielobjekte werden in Einzelretroreflektoren und Flächenretroreflektoren unterschieden. Als Einzelretroreflektoren sind reflektierende Zielobjekte definiert, die aus einem Prisma bestehen, wobei die Abmessungen des Prismas grösser als die typischen Laserstrahldurchmesser sind und ein auftreffender Laserstrahl eine Fläche des Tripelprismas erfasst. Als Flächenretroreflektoren sind reflektierende Zielobjekte definiert, die aus einer Mehrzahl von nebeneinander angeordneten Prismen bestehen, wobei die Abmessungen der Prismen kleiner als die typischen Laserstrahldurchmesser sind und ein auftreffender Laserstrahl mehrere Prismen erfasst; Beispiele für Flächenretroreflektoren sind Reflexionsfolien und Katzenaugen.

Das Dämpfungselement 40 ist im zweiten Zustand der Dämpfungseinrichtung 17 um einen Neigungswinkel β zu einer Ausbreitungsebene, die senkrecht zur optischen Achse des kollimierten Laserstrahls angeordnet ist, schräg gestellt. Durch die Schrägstellung des Dämpfungselementes 40 gegenüber der Ausbreitungsebene senkrecht zur optischen Achse des kollimierten Laserstrahls kann eine Rückreflexion des Laserstrahls in Richtung der Laserstrahlquelle 21 bzw. in Richtung des Detektors 22 verhindert oder zumindest verringert werden.

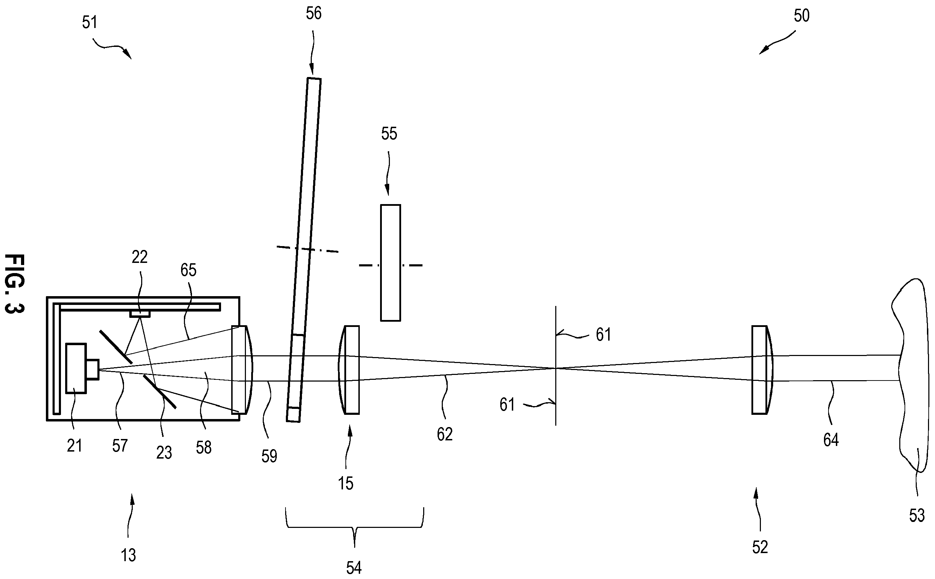

**FIG. 3** zeigt die optische Distanzmessung zu einem streuenden Zielobjekt mithilfe eines erfindungsgemäßen Systems **50**, das eine erfindungsgemäße Vorrichtung **51** zur optischen Distanzmessung zu einem Zielobjekt und eine externe Optik **52** umfasst. Das Zielobjekt ist als streuendes Zielobjekt **53** ausgebildet.

Die Vorrichtung 51 umfasst die Distanzmesseinrichtung 13 und eine Anpasseinrichtung **54**, die sich von der Anpasseinrichtung 14 der Vorrichtung 11 unterscheidet. Die Anpasseinrichtung 54 umfasst die zweite Strahlformungsoptik 15 und eine Fokusverschiebeeinrichtung **55.** Die Anpasseinrichtung 54 kann zusätzlich eine Dämpfungseinrichtung **56** umfassen, die zwischen der ersten Laserstrahlformungsoptik 25 und der zweiten Laserstrahlformungsoptik 31 angeordnet ist.

Die Distanzmesseinrichtung 13 erzeugt einen Laserstrahl **57** mit einer optischen Achse **58**, der die Strahlteilungsoptik 23 passiert und von der ersten Laserstrahlformungsoptik 25 in einen kollimierten Laserstrahl **59** umgeformt wird. Der kollimierte Laserstrahl 59 hat für alle Zielobjekte die gleichen Abmessungen und Eigenschaften. Nach dem Verlassen der Distanzmesseinrichtung 13 wird der kollimierte Laserstrahl 59 mithilfe der Anpasseinrichtung 54 umgeformt und an den Typ des Zielobjektes angepasst. Bei den Zielobjekten wird zwischen streuenden Zielobjekten, Einzelretroreflektoren und Flächenretroreflektoren unterschieden.

Bei der optischen Distanzmessung zu streuenden Zielobjekten wird der Laserstrahl am Zielobjekt über einen großen Winkelbereich gestreut und nur ein geringer Anteil der Strahlungsleistung des gestreuten Laserstrahls trifft auf den Detektor 22. Die Leistung der Laserstrahlquelle 21 ist so ausgelegt, dass auch bei streuenden Zielobjekten die auf den Detektor 22 auftreffende Strahlungsleistung für die Auswertung ausreicht. Bei der optischen Distanzmessung zu reflektierenden Zielobjekten wird der Laserstrahl am Zielobjekt reflektiert und trifft als gerichteter Empfangsstrahl auf den Detektor 22. Die auf den Detektor 22 auftreffende Strahlungsleistung des reflektierten Laserstrahls ist sehr viel grösser als die Strahlungsleistung des gestreuten Laserstrahls, was zu einem Übersteuern des Detektors 22 führen kann. Um ein Übersteuern des Detektors 22 zu verhindern, wird die Strahlungsleistung bei reflektierenden Zielobjekten mithilfe der Dämpfungseinrichtung 56 reduziert.

Die Dämpfungseinrichtung 56 umfasst ein erstes Dämpfungselement und ein zweites Dämpfungselement und ist zwischen drei verschiedenen Zuständen verstellbar ausgebildet. Die Dämpfungseinrichtung 56 ist zwischen einem ersten Zustand, in dem das erste und zweite Dämpfungselement außerhalb des Strahlengangs des Laserstrahls angeordnet sind, einem zweiten Zustand, in dem das erste Dämpfungselement innerhalb des Strahlengangs des Laserstrahls angeordnet ist, und einem dritten Zustand, in dem das zweite Dämpfungselement innerhalb des Strahlengangs des Laserstrahls angeordnet ist, verstellbar. Allgemein gilt, dass eine Dämpfungseinrichtung mit einer Anzahl von M verschiedenen Dämpfungselementen zwischen M+1 verschiedenen Zuständen verstellbar ist. Im ersten Zustand der Dämpfungseinrichtung befindet sich kein Dämpfungselement im Strahlengang, im zweiten Zustand der Dämpfungseinrichtung befindet sich das erste Dämpfungselement im Strahlengang und im M+1-ten Zustand der Dämpfungseinrichtung befindet sich das M-te Dämpfungselement im Strahlengang.

Bei streuenden Zielobjekten sollte der Strahlquerschnitt des Laserstrahls, der am Zielobjekt gestreut wird, möglichst klein sein. Daher werden kollimierte Laserstrahlen für die Distanzmessung zu streuenden Zielobjekten verwendet. Bei reflektierenden Zielobjekten, die als Einzelretroreflektoren ausgebildet sind, sollte der auftreffende Laserstrahl das Zentrum des Einzelretroreflektors treffen. Wenn der Laserstrahl das Zentrum des Einzelretroreflektors nicht trifft, kann der reflektierte Laserstrahl bzw. Empfangsstrahl durch Parallelversatz die Distanzmesseinrichtung 13 und damit den Detektor 22 verfehlen. Um die Anforderungen an die Genauigkeit, mit der der Laserstrahl auf das Zentrum des Einzelretroreflektors gerichtet werden muss, zu reduzieren, wird der Laserstrahl aufgeweitet und ein Laserstrahl mit einem größeren Strahlquerschnitt auf den Einzelretroreflektor gerichtet. Der Laserstrahl wird für die optische Distanzmessung zu Einzelretroreflektoren mithilfe der Fokusverschiebeeinrichtung 55 aufgeweitet.

Die Fokusverschiebeeinrichtung 55 umfasst ein erstes Fokusverschiebeelement und ein zweites Fokusverschiebeelement und ist zwischen drei verschiedenen Zuständen verstellbar ausgebildet. Die Fokusverschiebeeinrichtung 55 ist zwischen einem ersten Zustand, in dem das erste und zweite Fokusverschiebeelement außerhalb des Strahlengangs des Laserstrahls angeordnet sind, einem zweiten Zustand, in dem das erste Fokusverschiebeelement innerhalb des Strahlengangs des Laserstrahls angeordnet ist, und einem dritten Zustand, in dem das zweite Fokusverschiebeelement innerhalb des Strahlengangs des Laserstrahls angeordnet ist, verstellbar. Allgemein gilt, dass eine Fokusverschiebeeinrichtung mit einer Anzahl von N verschiedenen Fokusverschiebeelementen zwischen N+1 verschiedenen Zuständen verstellbar. Im ersten Zustand der Fokusverschiebeeinrichtung befindet sich kein Fokusverschiebeelement im Strahlengang, im zweiten Zustand der Fokusverschiebeeinrichtung befindet sich das erste Fokusverschiebeelement im Strahlengang und im N+1-ten Zustand der Fokusverschiebeeinrichtung befindet sich das N-te Fokusverschiebeelement im Strahlengang.

Bei der in FIG. 3 dargestellten optischen Distanzmessung zum streuenden Zielobjekt 53 erfolgt keine Dämpfung des Laserstrahls, keine Dämpfung des Empfangsstrahls und keine Aufweitung des Laserstrahls. Die Fokusverschiebeeinrichtung 55 und die Dämpfungseinrichtung 56 befinden sich in ihrem ersten Zustand. Im ersten Zustand der Fokusverschiebeeinrichtung 55 sind das erste und zweite Fokusverschiebeelement außerhalb des Strahlengangs des Laserstrahls angeordnet und im ersten Zustand der Dämpfungseinrichtung 56 sind das erste und zweite Dämpfungselement außerhalb des Strahlengangs des Laserstrahls angeordnet.

Der kollimierte Laserstrahl 59 trifft auf die zweite Laserstrahlformungsoptik 31, die als Fokussieroptik mit einer vorderseitigen Fokusebene **61** ausgebildet ist. Die Fokussieroptik 15 formt den kollimierten Laserstrahl 59 in einen fokussierten Laserstrahl **62** um. Um hinter der externen Optik 52 einen kollimierten Laserstrahl zu erzeugen, müssen die zweite Strahlformungsoptik 15 und die externe Optik 52 so zueinander positioniert werden, dass die vorderseitige Fokusebene 61 der zweiten Strahlformungsoptik 15 mit einer rückseitigen Fokusebene **63** der externen Optik 52 zusammenfällt. Der fokussierte Laserstrahl 62 wird von der externen Optik 52 in einen kollimierten Laserstrahl **64** umgeformt und auf das streuende Zielobjekt 53 gerichtet.

Der kollimierte Laserstrahl 64 wird am streuenden Zielobjekt 53 gestreut und trifft als gestreuter Empfangsstrahl **65** auf den Detektor 22. Auf dem Weg vom streuenden Zielobjekt 53 zum Detektor 22 passiert der gestreute Empfangsstrahl 65 die externe Optik 52, die zweite Empfangsstrahlformungsoptik 32, die erste Empfangsstrahlformungsoptik 26 und die Strahlteilungsoptik 23.

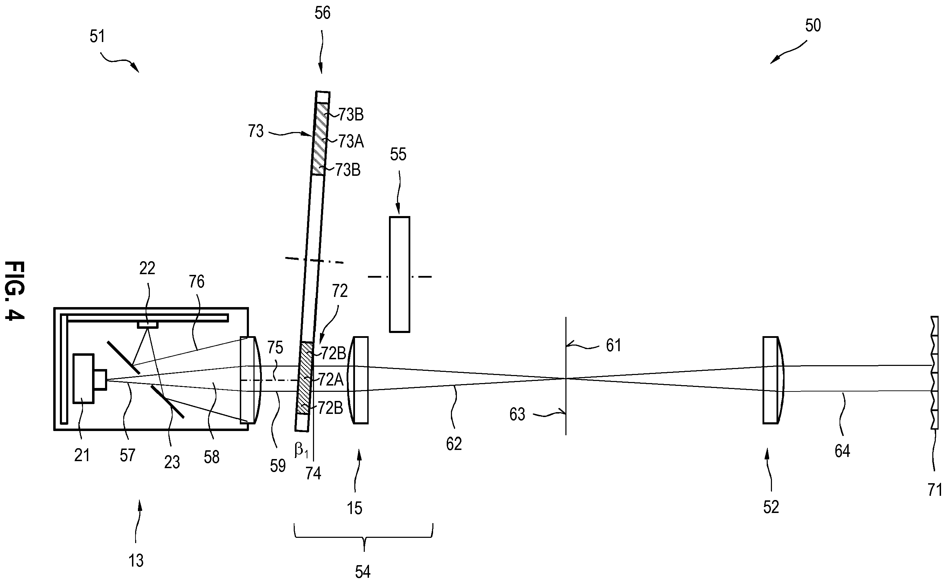

**FIG. 4** zeigt die optische Distanzmessung mit Hilfe der Vorrichtung 51 und der externen Optik 52 zu einem reflektierenden Zielobjekt, das als Flächenretroreflektor **71** ausgebildet ist. Dabei unterscheidet sich der Aufbau der FIG. 4 durch den Zustand der Dämpfungseinrichtung 56 vom Aufbau der FIG. 3.

Bei der in FIG. 3 dargestellten optischen Distanzmessung zum streuenden Zielobjekt 53 befindet sich die Dämpfungseinrichtung 56 im ersten Zustand und bei der sich FIG. 4 dargestellten optischen Distanzmessung zum Flächenretroreflektor 71 befindet sich die Dämpfungseinrichtung 56 im zweiten Zustand. Die Fokusverschiebeeinrichtung 55 befindet sich im ersten Zustand.

Die Dämpfungseinrichtung 56 umfasst ein erstes Dämpfungselement **72** und ein zweites Dämpfungselement **73**, die sich in ihren Dämpfungseigenschaften voneinander unterscheiden, wobei die Dämpfungseigenschaften über den Transmissionsgrad eingestellt werden. Die Dämpfungseinrichtung 56 ist zwischen dem ersten Zustand, in dem das erste und zweite Dämpfungselement 72, 73 außerhalb des Strahlengangs des Laserstrahls angeordnet sind, dem zweiten Zustand, in dem das erste Dämpfungselement 72 innerhalb des Strahlengangs des Laserstrahls angeordnet ist, und dem dritten Zustand, in dem das zweite Dämpfungselement 73 innerhalb des Strahlengangs des Laserstrahls angeordnet ist, verstellbar.

Da die Strahlteilungsoptik 23 als Lochspiegel ausgebildet ist, dient der innere Bereich **72A** des ersten Dämpfungselementes 72 zur Dämpfung des Laserstrahls und wird als erstes Laserstrahl-Dämpfungselement 72A bezeichnet und der äussere Bereich **72B** des ersten Dämpfungselementes 72 dient zur Dämpfung des Empfangsstrahls und wird als erstes Empfangsstrahl-Dämpfungselement 72B bezeichnet. Der innere Bereich **73A des** zweiten Dämpfungselementes 73 dient zur Dämpfung des Laserstrahls und wird als zweites Laserstrahl-Dämpfungselement 73A bezeichnet und der äussere Bereich **73B** des zweiten Dämpfungselementes 73 dient zur Dämpfung des Empfangsstrahls und wird als zweites Empfangsstrahl-Dämpfungselement 73B bezeichnet. Bei einer Strahlteilungsoptik, die als Polarisationsstrahlteiler oder halbdurchlässiger Spiegel ausgebildet ist, dient der innere Bereich eines Dämpfungselementes zur Dämpfung des Laserstrahls und das gesamte Dämpfungselement dient zur Dämpfung des Empfangsstrahls.

FIG. 4 zeigt die Dämpfungseinrichtung 56 im zweiten Zustand, in dem das erste Dämpfungselement 72 im Strahlengang des kollimierten Laserstrahls angeordnet ist. Die Anordnung der Dämpfungseinrichtung 56 im Strahlengang des kollimierten Laserstrahls hat den Vorteil, dass das erste Dämpfungselement 72 schräg gestellt werden kann, um eine Rückreflexion des Laserstrahls in Richtung der Laserstrahlquelle 21 bzw. in Richtung des Detektors 22 zu verhindern oder zumindest zu verringern. Das erste Dämpfungselement 72 ist im zweiten Zustand der Dämpfungseinrichtung 56 um einen ersten Neigungswinkel β₁ zu einer Ausbreitungsebene **74** schräg gestellt, wobei die Ausbreitungsebene 74 senkrecht zur optischen Achse **75** des kollimierten Laserstrahls angeordnet ist.

Der kollimierte Laserstrahl 59 wird mithilfe des ersten Dämpfungselementes 72 gedämpft und trifft auf die zweite Laserstrahlformungsoptik 31, die den gedämpften kollimierten Laserstrahl 59 in den fokussierten Laserstrahl 62 umformt. Die externe Optik 52 ist so positioniert, dass die vorderseitige Fokusebene 61 der zweiten Laserstrahlformungsoptik 31 mit der rückseitigen Fokusebene 63 der externen Optik 52 zusammenfällt. Der fokussierte Laserstrahl 62 wird von der externen Optik 52 in den kollimierten Laserstrahl 64 umgeformt und auf den Flächenretroreflektor 71 gerichtet.

Der kollimierte Laserstrahl 64 wird am Flächenretroreflektor 71 reflektiert und trifft als reflektierter Empfangsstrahl **76** auf den Detektor 22. Auf dem Weg vom Flächenretroreflektor 71 zum Detektor 22 passiert der reflektierte Empfangsstrahl 76 die externe Optik 52, die zweite Empfangsstrahlformungsoptik 32, das erste Dämpfungselement 72, die erste Empfangsstrahlformungsoptik 26 und die Strahlteilungsoptik 23.

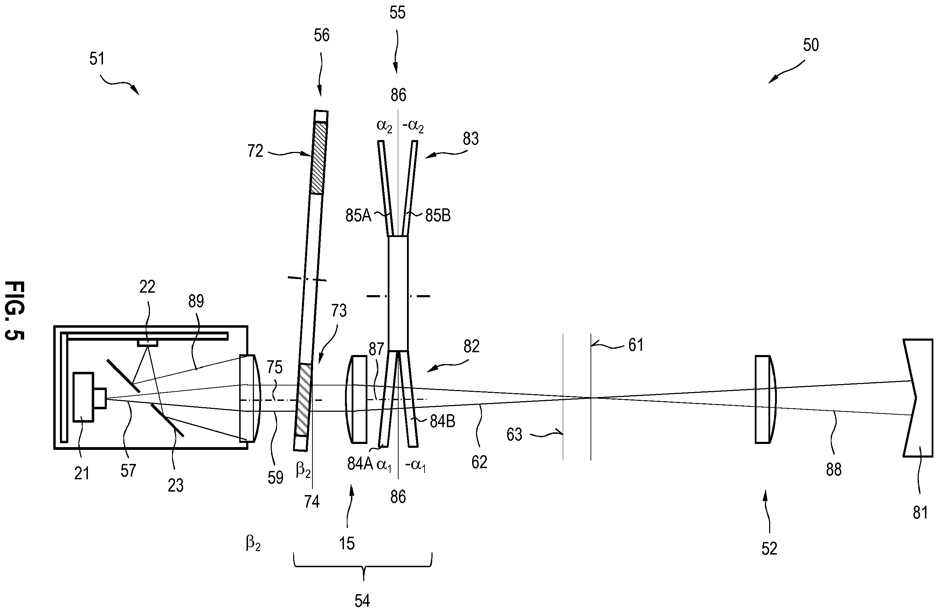

**FIG. 5** zeigt die optische Distanzmessung mit Hilfe der Vorrichtung 51 und der externen Optik 52 zu einem reflektierenden Zielobjekt, das als Einzelretroreflektor **81** ausgebildet ist. Dabei unterscheidet sich der Aufbau der FIG. 5 vom Aufbau der FIGN. 3 und 4 durch den Zustand der Fokusverschiebeeinrichtung 55 und den Zustand der Dämpfungseinrichtung 56.

Bei der in FIG. 3 dargestellten optischen Distanzmessung zum streuenden Zielobjekt 53 befindet sich die Fokusverschiebeeinrichtung 55 und die Dämpfungseinrichtung 56 im ersten Zustand, bei der in FIG. 4 dargestellten optischen Distanzmessung zum Flächenretroreflektor 71 befindet sich die Fokusverschiebeeinrichtung 55 im ersten Zustand und die Dämpfungseinrichtung 56 im zweiten Zustand und bei der in FIG. 5 dargestellten optischen Distanzmessung zum Einzelretroreflektor 81 befindet sich die Fokusverschiebeeinrichtung 55 im zweiten Zustand und die Dämpfungseinrichtung 56 im dritten Zustand.

FIG. 5 zeigt die Dämpfungseinrichtung 56 im dritten Zustand, in dem das zweite Dämpfungselement 73 im Strahlengang des Laserstrahls angeordnet ist. Durch die Anordnung der Dämpfungseinrichtung 56 im Strahlengang des kollimierten Laserstrahls kann das zweite Dämpfungselement 73 schräg gestellt werden, um eine Rückreflexion des Laserstrahls in Richtung der Laserstrahlquelle 21 bzw. in Richtung des Detektors 22 zu verhindern oder zumindest zu verringern. Das zweite Dämpfungselement 73 ist im dritten Zustand der Dämpfungseinrichtung 56 um einen zweiten Neigungswinkel β₂ zur Ausbreitungsebene 74, die senkrecht zur optischen Achse 75 des kollimierten Laserstrahls angeordnet ist, schräg gestellt. Der zweite Neigungswinkel β₂ des zweiten Dämpfungselementes 73 und der erste Neigungswinkel β₁ des ersten Dämpfungselementes 72 stimmen bevorzugt überein, können aber auch voneinander verschieden sein.

Die Fokusverschiebeeinrichtung 55 umfasst ein erstes Fokusverschiebeelement **82** und ein zweites Fokusverschiebeelement **83**, die sich in ihren optischen Eigenschaften voneinander unterscheiden. Die Fokusverschiebeeinrichtung 55 ist zwischen dem ersten Zustand, in dem das erste und zweite Fokusverschiebeelement 82, 83 außerhalb des Strahlengangs des Laserstrahls angeordnet sind, dem zweiten Zustand, in dem das erste Fokusverschiebeelement 82 innerhalb des Strahlengangs des Laserstrahls angeordnet ist, und dem dritten Zustand, in dem das zweite Fokusverschiebeelement 83 innerhalb des Strahlengangs des Laserstrahls angeordnet ist, verstellbar.

Das erste Fokusverschiebeelement 82 umfasst zwei schräg gestellte erste Glasplatten **84A**, **84B** und das zweite Fokusverschiebeelement 83 zwei schräg gestellte zweite Glasplatten **85A**, **85B.** Die ersten Glasplatten 84A, 84B und zweiten Glasplatten 85A, 85B sind zu einer Ausbreitungsebene **86** schräg gestellt, die senkrecht zur optischen Achse **87** des fokussierten Laserstrahls 62 angeordnet ist. Die erste der zwei ersten Glasplatten 84A ist um einen positiven ersten Neigungswinkel α₁ und die zweite der zwei ersten Glasplatten 84B um einen entsprechenden negativen ersten Neigungswinkel -α₁ zur Ausbreitungsebene 86 schräg gestellt. Die erste der zwei zweiten Glasplatten 85A ist um einen positiven zweiten Neigungswinkel α₂ und die zweite der zwei zweiten Glasplatten 85B um einen entsprechenden negativen zweiten Neigungswinkel -α₂ zur Ausbreitungsebene 86 schräg gestellt. Durch die Neigung der Glasplatten wird eine Rückreflexion des Laserstrahls in Richtung der Laserstrahlquelle 21 bzw. in Richtung des Detektors 22 verhindert oder zumindest verringert.

Der kollimierte Laserstrahl 59 trifft auf das zweite Dämpfungselement 73, an dem der kollimierte Laserstrahl gedämpft wird. Der kollimierte Laserstrahl 59 trifft auf die zweite Laserstrahlformungsoptik 31, die den kollimierten Laserstrahl 59 in den fokussierten Laserstrahl 62 umformt. Der fokussierte Laserstrahl 62 trifft auf das erste Fokusverschiebeelement 82, das die vorderseitige Fokusebene 61 der zweiten Laserstrahlformungsoptik 31 gegenüber der rückseitigen Fokusebene 63 der externen Optik 52 verschiebt. Die Verschiebung führt dazu, dass die externe Optik 52 den fokussierten Laserstrahl 62 nicht kollimiert, sondern aufweitet. Der fokussierte Laserstrahl 62 wird von der externen Optik 52 in einen aufgeweiteten Laserstrahl **88** umgeformt.

Der aufgeweitete Laserstrahl 88 wird am Einzelretroreflektor 81 reflektiert und trifft als reflektierter Empfangsstrahl **89** auf den Detektor 22. Auf dem Weg vom Einzelretroreflektor 81 zum Detektor 22 passiert der reflektierte Empfangsstrahl 89 die externe Optik 52, das erste Fokusverschiebeelement 82, die zweite Empfangsstrahlformungsoptik 32, das zweite Dämpfungselement 73, die erste Empfangsstrahlformungsoptik 26 und die Strahlteilungsoptik 23.

## Patentansprüche

1. Vorrichtung (11; 51) zur optischen Distanzmessung zu einem Zielobjekt (53; 71; 81), das als streuendes Zielobjekt (53) oder reflektierendes Zielobjekt (71; 81) ausgebildet ist, aufweisend:
▪ eine Laserstrahlquelle (21), die als erste elektrooptische Komponente ausgebildet ist und einen Laserstrahl (57) entlang einer optischen Achse (58) aussendet,
▪ einen Detektor (22), der als zweite elektrooptische Komponente ausgebildet ist und einen am Zielobjekt gestreuten Empfangsstrahl (65) oder reflektierten Empfangsstrahl (76; 89) empfängt,
▪ eine erste Laserstrahlformungsoptik (25), die als Kollimationsoptik ausgebildet ist und den Laserstrahl (57) in einen kollimierten Laserstrahl (59) umformt,
▪ eine Anpasseinrichtung (14; 54) mit einer zweiten Laserstrahlformungsoptik (31), die im Strahlengang des Laserstrahls hinter der ersten Laserstrahlformungsoptik (25) angeordnet ist, und
▪ eine Strahlteilungsoptik (23), die den Laserstrahl und den Empfangsstrahl voneinander trennt und die im Strahlengang des Laserstrahls vor der ersten Laserstrahlformungsoptik (25) angeordnet ist,
**dadurch gekennzeichnet, dass** die zweite Laserstrahlformungsoptik (31) als Fokussieroptik, die den kollimierten Laserstrahl (59) in einen fokussierten Laserstrahl (62) umformt, ausgebildet ist und die Anpasseinrichtung (14; 54) eine Fokusverschiebeeinrichtung (16; 55) umfasst, die in den Strahlengang des fokussierten Laserstrahls (62) verstellbar ist.

2. Vorrichtung nach Anspruch 1, **dadurch gekennzeichnet, dass** die erste Laserstrahlformungsoptik (25) und die zweite Laserstrahlformungsoptik (31) an einem gemeinsamen Optikträger (28) befestigt sind.

3. Vorrichtung nach einem der Ansprüche 1 bis 2, **dadurch gekennzeichnet, dass** die Fokusverschiebeeinrichtung (16) ein Fokusverschiebeelement (33) umfasst, wobei die Fokusverschiebeeinrichtung (16) zwischen einem ersten Zustand, in dem das Fokusverschiebeelement (33) außerhalb des Strahlengangs des Laserstrahls angeordnet ist, und einem zweiten Zustand, in dem das Fokusverschiebeelement (33) im Strahlengang des Laserstrahls angeordnet ist, verstellbar ist.

4. Vorrichtung nach Anspruch 3, **dadurch gekennzeichnet, dass** das Fokusverschiebeelement (33) zwei schräg gestellte ebene Glasplatten (34A, 34B) umfasst, wobei im zweiten Zustand der Fokusverschiebeeinrichtung (16) eine erste der zwei Glasplatten (34A) um einen positiven Neigungswinkel (a) und eine zweite der zwei Glasplatten (34B) um einen entsprechenden negativen Neigungswinkel (-a) zu einer Ausbreitungsebene (37), die senkrecht zur optischen Achse (38) des Laserstrahls angeordnet ist, schräg gestellt ist.

5. Vorrichtung nach einem der Ansprüche 1 bis 2, **dadurch gekennzeichnet, dass** die Fokusverschiebeeinrichtung (55) ein erstes Fokusverschiebeelement (82) und ein zweites Fokusverschiebeelement (83) umfasst, wobei die Fokusverschiebeeinrichtung (55) zwischen einem ersten Zustand, in dem das erste und zweite Fokusverschiebeelement (82, 83) außerhalb des Strahlengangs des Laserstrahls angeordnet sind, einem zweiten Zustand, in dem das erste Fokusverschiebeelement (82) im Strahlengang des Laserstrahls angeordnet ist, und einem dritten Zustand, in dem das zweite Fokusverschiebeelement (83) im Strahlengang des Laserstrahls angeordnet ist, verstellbar ist.

6. Vorrichtung nach Anspruch 5, **dadurch gekennzeichnet, dass** das erste Fokusverschiebeelement (82) zwei schräg gestellte erste Glasplatten (84A, 84B) umfasst, wobei im zweiten Zustand der Fokusverschiebeeinrichtung (55) eine erste der zwei ersten Glasplatten (84A) um einen positiven ersten Neigungswinkel (α₁) und eine zweite der zwei ersten Glasplatten (84B) um einen entsprechenden negativen ersten Neigungswinkel (-α₁) zu einer Ausbreitungsebene (86), die senkrecht zur optischen Achse (87) des Laserstrahls angeordnet ist, schräg gestellt ist, und das zweite Fokusverschiebeelement (83) zwei schräg gestellte zweite Glasplatten (85A, 85B) umfasst, wobei im dritten Zustand der Fokusverschiebeeinrichtung (55) eine erste der zwei zweiten Glasplatten (85A) um einen positiven zweiten Neigungswinkel (α₂) und eine zweite der zwei zweiten Glasplatten (85B) um einen entsprechenden negativen zweiten Neigungswinkel (-α₂) zur Ausbreitungsebene (86) schräg gestellt ist.

7. Vorrichtung nach einem der Ansprüche 1 bis 6, **dadurch gekennzeichnet, dass** die Anpasseinrichtung (14; 54) eine Dämpfungseinrichtung (17; 56) umfasst, wobei die Dämpfungseinrichtung (17; 56) im Strahlengang des Laserstrahls zwischen der ersten Laserstrahlformungsoptik (25) und der zweiten Laserstrahlformungsoptik (31) angeordnet ist.

8. Vorrichtung nach Anspruch 7, **dadurch gekennzeichnet, dass** die Dämpfungseinrichtung (17) ein Dämpfungselement (40) umfasst, wobei die Dämpfungseinrichtung (17) zwischen einem ersten Zustand, in dem das Dämpfungselement (40) außerhalb des Strahlengangs des Laserstrahls angeordnet ist, und einem zweiten Zustand, in dem das Dämpfungselement (40) im Strahlengang des Laserstrahls angeordnet ist, verstellbar ist.

9. Vorrichtung nach Anspruch 8, **dadurch gekennzeichnet, dass** das Dämpfungselement (40) im zweiten Zustand der Dämpfungseinrichtung (17) um einen Neigungswinkel (β) zu einer Ausbreitungsebene (37), die senkrecht zur optischen Achse (38) des kollimierten Laserstrahls (59) angeordnet ist, schräg gestellt ist.

10. Vorrichtung nach Anspruch 7, **dadurch gekennzeichnet, dass** die Dämpfungseinrichtung (56) ein erstes Dämpfungselement (72) und ein zweites Dämpfungselement (73) umfasst, wobei die Dämpfungseinrichtung (56) zwischen einem ersten Zustand, in dem das erste und zweite Dämpfungselement (72, 73) außerhalb des Strahlengangs des Laserstrahls angeordnet sind, einem zweiten Zustand, in dem das erste Dämpfungselement (72) im Strahlengang des Laserstrahls angeordnet ist, und einem dritten Zustand, in dem das zweite Dämpfungselement (73) im Strahlengang des Laserstrahls angeordnet ist, verstellbar ist.

11. Vorrichtung nach Anspruch 10, **dadurch gekennzeichnet, dass** das erste Dämpfungselement (72) im zweiten Zustand der Dämpfungseinrichtung (56) um einen ersten Neigungswinkel (β₁) und das zweite Dämpfungselement (73) im dritten Zustand der Dämpfungseinrichtung (56) um einen zweiten Neigungswinkel (β₂) zu einer Ausbreitungsebene (74), die senkrecht zur optischen Achse (75) des kollimierten Laserstrahls angeordnet ist, schräg gestellt ist.

12. Vorrichtung nach einem der Ansprüche 1 bis 11, **dadurch gekennzeichnet, dass** die Vorrichtung (11; 51) eine erste Empfangsstrahlformungsoptik (26) aufweist und die Anpasseinrichtung (14; 54) eine zweite Empfangsstrahlformungsoptik (32) umfasst.

13. System (10; 50) umfassend die Vorrichtung (11; 51) zur optischen Distanzmessung nach einem der Ansprüche 1 bis 12 und eine externe Optik (12; 52), die im Strahlengang des Laserstrahls hinter der Vorrichtung (11; 51) angeordnet ist.

14. System nach Anspruch 13, **dadurch gekennzeichnet, dass** eine rückseitige Fokusebene (63) der externen Optik (52) mit einer vorderseitigen Fokusebene (61) der zweiten Laserstrahlformungsoptik (31) im Wesentlichen zusammenfällt, wobei kein Fokusverschiebeelement im Strahlengang des Laserstrahls angeordnet ist.
